# FASCICULE DE BREVET EUROPEEN

(11) **EP 0 854 984 B1**
(45) Date de publication et mention de la délivrance du brevet: **08.12.1999**
(21) Numéro de dépôt: 96934892.9
(22) Date de dépôt: 11.10.1996
(51) Int. Cl.: F16C 3/14, F16N 21/06

(54) **VILEBREQUIN DE MOTEUR A COMBUSTION INTERNE MULTICYLINDRE**
KURBELWELLE FÜR EINE BRENNKRAFTMASCHINE MIT MEHREREN ZYLINDERN
CRANKSHAFT FOR A MULTI-CYLINDER INTERNAL COMBUSTION ENGINE

(30) Priorité: 13.10.1995 FR 9512015
(43) Date de publication de la demande: 29.07.1998
(73) Titulaire: RENAULT, 92109 Boulogne-Billancourt (FR)
(72) Inventeur: GONZALEZ MAESTRO, José Ramon, E-47013 Valladolid (ES); RAMIREZ ORTEGA, Carlos, E-47008 Valladolid (ES); SANZ GIMENEZ RICO, Fernando, E-47003 Valladolid (ES)
(74) Mandataire: Fernandez, Francis
(86) Numéro de dépôt international: FR9601585
(87) Numéro de publication internationale: WO9713983

(56) Documents cités:
- FR-A- 1 310 621
- FR-A- 2 136 130
- US-A- 1 511 200
- US-A- 4 736 865

## Description

La présente invention concerne les vilebrequins des moteurs à combustion interne multicylindres destinés notamment à équiper les véhicules automobiles. L'invention concerne plus particulièrement un dispositif d'étanchéité pour les conduits d'huile de lubrification traversant les vilebrequins.

Le vilebrequin ou arbre moteur d'un moteur à combustion multicylindre reçoit la poussée des pistons par l'intermédiaire des bielles et fournit un mouvement rotatif à partir des mouvements rectilignes alternatifs des pistons.

Classiquement, le vilebrequin d'un moteur à combustion interne présente des portées d'axe ou tourillons placés en ligne destinées à venir tourner dans des paliers correspondants portés par le bloc-cylindres. Les manetons formant les axes des têtes de bielles sont solidaires des tourillons par des paires de bras s'étendant sensiblement perpendiculairement à l'axe longitudinal du vilebrequin.

Le vilebrequin est également pourvu de contrepoids servant à l'équilibrage statique et dynamique des équipages mobiles formés par les différents ensembles maneton-bielle-piston. Chaque contrepoids est porté par au moins l'un des bras supportant le maneton correspondant, à l'opposé de ce dernier par rapport au tourillon.

Classiquement, les paliers d'un vilebrequin de moteur à combustion interne sont alimentés en huile sous pression afin d'en opérer une lubrification hydrodynamique. Pour ce faire, l'huile refoulée par la pompe à huile portée par le carter moteur est amenée aux tourillons du vilebrequin à travers des passages appropriés ménagés dans le bloc-cylindres. Cette huile est ensuite amenée aux manetons par des conduits ménagés à travers le vilebrequin et mettant en communication les manetons avec les tourillons.

Ces conduits d'amenée d'huile sont généralement réalisés par des perçages traversant les bras du vilebrequin, perçages qu'il est nécessaire de bouchonner pour permettre l'alimentation en huile des manetons. On utilise donc classiquement pour ce faire des bouchons en tôle emboutie ou encore des billes métalliques montée serrées comme cela est par exemple décrit dans le document US-A-1511200. Il apparaît toutefois que de tels moyens d'obturation peuvent être chassés de leurs logements sous l'action combinée de la pression hydraulique et des fortes vibrations auxquelles est soumis le vilebrequin en fonctionnement, avec toutes les conséquences que cela peut entraîner.

Il est également connu par le document US-A-4630576 de bouchonner un conduit d'huile traversant un culbuteur par un rivet. Ce rivet de type classique ne permet toutefois pas d'étancher avec fiabilité les perçages traversant les vilebrequins.

La présente invention a donc pour objet un vilebrequin de moteur à combustion interne remédiant aux inconvénients de l'art antérieur précité en ce qu'il garantit l'étanchéité des conduits d'amenée d'huile et ce, de façon fiable et relativement peu coûteuse.

Le vilebrequin selon l'invention est plus particulièrement destiné à équiper un moteur à combustion interne multicylindre, il est constitué par un arbre présentant des tourillons, des manetons réunis aux tourillons par des bras, ces bras étant traversés par des perçages pour permettre le passage de l'huile de lubrification des tourillons aux manetons.

Selon l'invention, le vilebrequin pour moteur à combustion interne est caractérisé en ce que les perçages servant à l'alimentation en huile des manetons sont étanchés à leur extrémité débouchante, par des rivets, chacun de ces rivets étant constitué par un manchon métallique et par une tige dont une extrémité tronconique est destinée à être montée à force à l'intérieur du manchon, l'extrémité tronconique de la tige étant positionnée à l'intérieur du manchon de sorte que son plus grand diamètre soit dirigé vers l'intérieur du perçage.

De tels rivets de type aveugle ou borgne assurent de façon remarquablement fiable l'étanchéité des vilebrequins.

Selon une autre caractéristique du vilebrequin objet de l'invention, l'extrémité tronconique de la tige est positionnée à l'intérieur du manchon de sorte que son plus grand diamètre soit en saillie à l'extérieur de celui-ci.

Selon une autre caractéristique du vilebrequin objet de l'invention, le manchon présente une rainure périphérique.

On comprendra mieux les buts, aspects et avantages de la présente invention, d'après la description présentée ci-après d'un mode de réalisation de l'invention, donné à titre d'exemple non limitatif, en se référant aux dessins annexés, dans lesquels :
- la figure 1 est une vue de face en coupe partielle d'un vilebrequin selon l'invention ;
- la figure 2 est une vue de détail de l'extrémité débouchante d'un conduit d'amenée d'huile représentée à la figure 1.

Seuls les éléments nécessaires à la compréhension de l'invention ont été représentés. Pour faciliter la lecture des dessins, les mêmes éléments portent les mêmes références d'une figure à l'autre.

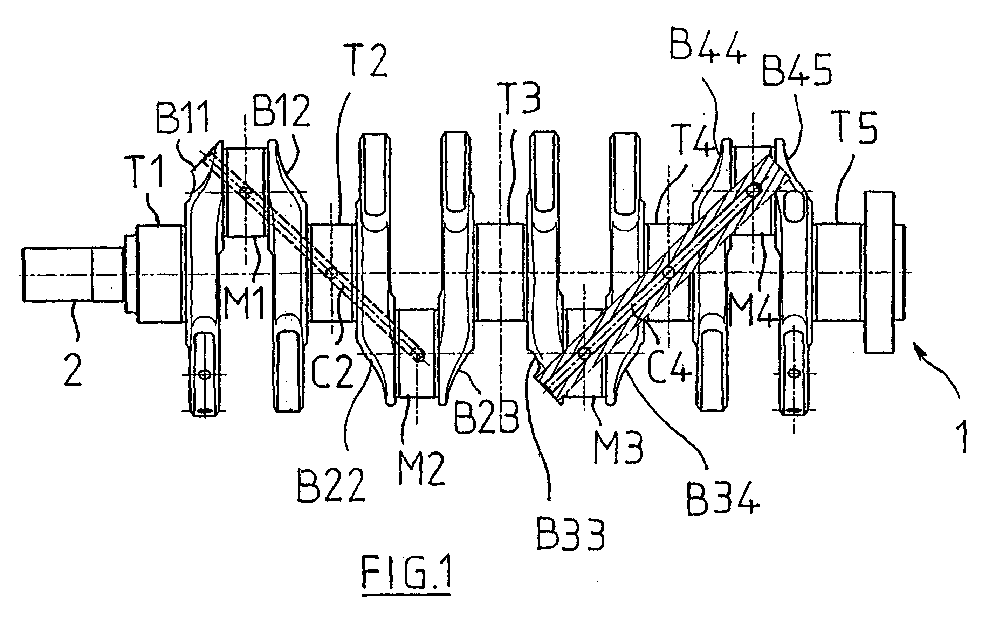

On a représenté sur la figure 1 une vue d'un vilebrequin référencé 1, à cinq tourillons et quatre manetons, destiné à équiper un moteur à combustion interne du type à quatre cylindres en ligne. Ce vilebrequin est constitué par un arbre 2 obtenu par fonderie ou par forgeage qui comprend des portées d'axe ou tourillons placés en ligne et destinés à venir tourner dans des paliers correspondant du carter-cylindres non figuré du moteur. Les manetons formant les axes des têtes de bielles sont solidaires de tourillons par des bras s'étendant sensiblement perpendiculairement à l'axe longitudinal du vilebrequin. Par ailleurs, les bras sont munis de contrepoids servant à l'équilibrage statique et dynamique des équipages mobiles formés par les différents ensembles maneton-bielle-piston.

On a ainsi, en partant d'une extrémité de l'arbre, un tourillon T1 extrême, puis un tourillon intermédiaire T2, puis un tourillon central T3, puis un tourillon intermédiaire T4 et enfin un tourillon extrême T5. Entre ces 5 tourillons sont disposés 4 manetons, un maneton extrême M1 puis deux manetons intermédiaires M2 et M3 à 180 degrés par rapport au maneton M1 et enfin le maneton extrême M4 dans la même position que le maneton M1. Chaque maneton M1,M2,M3,M4 est réuni aux touriilons adjacents respectivement T1,T2 ; T2,T3 ; T3,T4 ; T4, T5 par des bras s'étendant sensiblement perpendiculairement à l'axe longitudinal de l'arbre 2, respectivement B11,B12 ; B22,B23 ; B33,B34 B44,B45.

L'équilibrage des équipages mobiles formés par les différents ensembles maneton-bielle-piston est opéré par huit contrepoids disposés respectivement sur chacun des bras, ces contrepoids étant placés à l'opposé des manetons correspondants par rapport aux tourillons.

L'alimentation en huile de lubrification des manetons M1,M2,M3,M4 est assurée au moyen de deux trous cylindriques borgnes C2 et C4 percés à travers le vilebrequin. Le premier perçage formant conduit d'huile C2 s'étend dans le plan axial médian du vilebrequin transversalement par rapport à l'axe de ce dernier, depuis l'extrémité de la face latérale externe du bras B11 s'étendant au voisinage du maneton M1 jusqu'au centre du maneton M2 en passant par le centre du maneton M1 et le centre du tourillon T2. Ce perçage C2 communique avec la surface des manetons M1 et M2 et du tourillon T2 par l'intermédiaire de perçages auxiliaires s'étendant radialement. Ainsi, l'huile amenée à travers le bloc-cylindres jusqu'au tourillon T2 est refoulée à travers le conduit C2 jusqu'aux deux manetons collatéraux M1 et M2.

Le second perçage C4 s'étend également dans le plan axial médian du vilebrequin, de façon symétrique à C2 par rapport à l'axe du vilebrequin, depuis l'extrémité du bras B33 opposée au contrepoids correspondant jusqu'au centre du maneton M4 en passant par le centre du maneton M3 et le centre du tourillon T4. Ce perçage C4 communique de façon similaire avec la surface des manetons M3 et M4 et du tourillon T4, par l'intermédiaire de perçages auxiliaires s'étendant radialement.

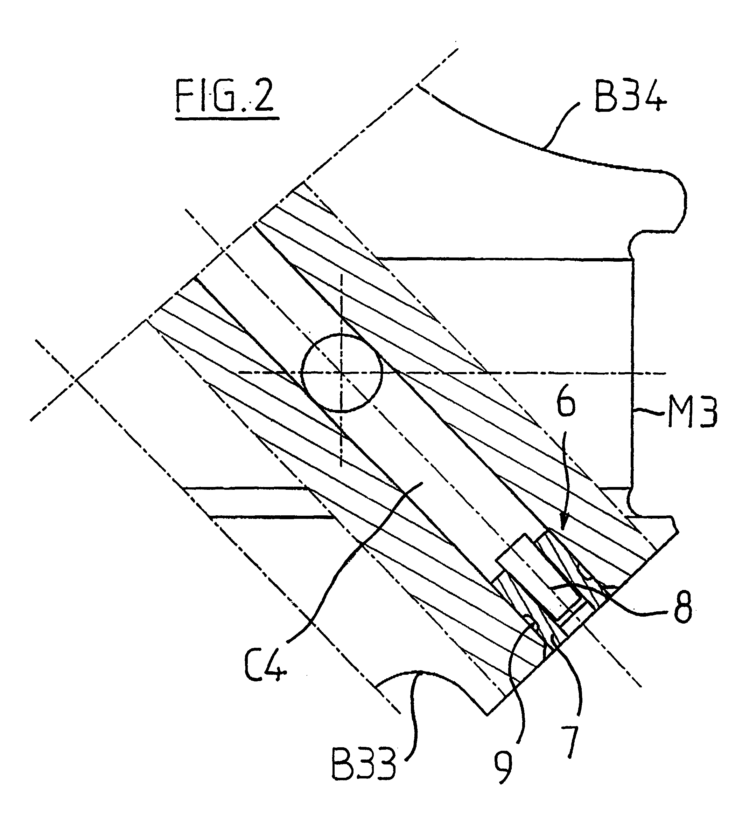

Comme on peut le voir sur la figure 2 qui présente plus particulièrement l'extrémité débouchante du perçage C4, les perçages sont obturés à leur extrémité débouchante par des rivets 6. Chaque rivet 6 se compose d'un manchon cylindrique 7 métallique (acier ou aluminium) de longueur axiale donnée, et d'une tige métallique possédant une extrémité tronconique 8, de longueur correspondante. Cette extrémité 8 est destinée à être montée à force à l'intérieur du manchon 7 de sorte que sa partie de plus grand diamètre, légèrement en saillie hors du manchon, se trouve dirigée vers l'intérieur du perçage.

Le montage à force de l'extrémité 8 dans le manchon 7 entraîne la déformation de ce dernier et l'étanchéité à l'huile. Par ailleurs, le positionnement de l'extrémité 8, grande base tournée vers l'intérieur du perçage, rend le système, soumis à la pression hydraulique, auto-bloquant. Le montage ainsi réalisé est donc particulièrement résistant et ne peut se libérer du seul fait des vibrations du vilebrequin ou de la pression hydraulique. Pour augmenter encore l'étanchéité du montage en assurant une meilleure répartition de la pression du manchon 7 sur les parois du perçage on peut prévoir de réaliser une rainure périphérique 9 dans le corps du manchon 7.

La mise en place du rivet 6 dans le perçage C4, est simple et facilement automatisable. Le rivet se compose initialement d'un ensemble formé du manchon 7 et d'une tige. La longueur de la tige est 5 ou 6 fois celle du manchon. La tige a une géométrie cylindrique jusqu'à son extrémité tronconique 8, le diamètre de la tige cylindrique correspondant au plus petit diamètre de l'extrémité tronconique 8. Dans la zone d'intersection de ces deux formes est ménagée une entaille permettant la séparation de la partie cylindrique au montage par application d'un effort de traction adapté.

Le manchon 7 est enfilé sur la tige jusqu'à venir en appui contre l'extrémité tronconique 8 de cette dernière, puis l'ensemble est logé dans le perçage C4 où le manchon est maintenu en position par des moyens appropriés. Il suffit alors de tirer sur l'extrémité libre de la tige jusqu'à obtenir sa cassure au droit de l'entaille. L'extrémité tronconique 8 en s'enfonçant dans le manchon 7 comprime ce dernier contre les parois intérieures du perçage C4.

Bien entendu, l'invention n'est nullement limitée au mode de réalisation décrit et illustré qui n'a été donné qu'à titre d'exemple.

## Revendications

1. Vilebrequin pour un moteur à combustion interne multicylindre, constitué par un arbre (2) présentant des tourillons (T1,T2,T3,T4,T5), des manetons (M1,M2,M3,M4) réunis auxdits tourillons par des bras (B11,B12,B22,B23,B33,B34,B44,B45), lesdits bras étant traversés par des perçages (C2,C4) pour permettre le passage de l'huile de lubrification des tourillons (T2,T4) aux manetons (M1,M2,M3,M4), caractérisé en ce que lesdits perçages (C2,C4) sont étanchés à leur extrémité débouchante par des rivets (6), chacun desdits rivets (6) étant constitué par un manchon (7) métallique et par une tige dont une extrémité tronconique (8) est destinée à être montée à force à l'intérieur dudit manchon (7), ladite extrémité tronconique (8) étant positionnée à l'intérieur dudit manchon (7) de sorte que son plus grand diamètre soit dirigé vers l'intérieur du perçage (C4).

2. Vilebrequin pour un moteur à combustion interne multicylindre selon la revendication 1, caractérisé en ce que ladite extrémité tronconique (8) est positionnée à l'intérieur dudit manchon (7) de sorte que son plus grand diamètre soit en saillie à l'extérieur dudit manchon.

3. Vilebrequin pour un moteur à combustion interne multicylindre selon l'une quelconque des revendications 1 à 2, caractérisé en ce que ledit manchon (7) présente une rainure (9) périphérique.

## Patentansprüche

1. Kurbelwelle für einen Verbrennungsmotor mit mehreren Zylindern, bestehend aus einer Welle (2) mit Kurbelwellenzapfen (T1, T2, T3, T4, T5) und mit Pleuellagerzapfen (M1, M2, M3, M4), die mit den Kurbelwellenzapfen über Arme (B11, B12, B22, B23, B33, B34, B44, B45) verbunden sind, wobei die Arme von Bohrungen (C2, C4) durchsetzt werden, um die Zufuhr von Schmieröl von den Kurbelwellenzapfen (T2, T4) zu den Pleuellagerzapfen (M1, M2, M3, M4) zu ermöglichen, dadurch gekennzeichnet, dass die Bohrungen (C2, C4) an ihren Mündungsenden durch Nieten (6) abgedichtet sind, wobei jede Niete (6) aus einer Metallbuchse (7) und aus einem Bolzen besteht, dessen eines kegelstumpfförmiges Ende (8) dazu dient, im Preßsitz in das Innere der Buchse (7) einzugreifen, wobei das kegelstumpfförmige Ende (8) im Inneren der Buchse (7) derart angeordnet ist, dass sein größerer Durchmesser zum Inneren der Bohrung (C4) hin gerichtet ist.

2. Kurbelwelle für einen Verbrennungsmotor mit mehreren Zylindern nach Anspruch 1, dadurch gekennzeichnet, dass das kegelstumpfförmige Ende (8) im Inneren der Buchse (7) derart angeordnet ist, dass sein größerer Durchmesser aus der Buchse herausragt.

3. Kurbelwelle für einen Verbrennungsmotor mit mehreren Zylindern nach einem der Ansprüche 1 bis 2, dadurch gekennzeichnet, dass die Buchse (7) eine Umfangsnut (9) aufweist.

## Claims

1. A crankshaft for a multi-cylinder internal combustion engine formed by a shaft (2) having journals (T1, T2, T3, T4, T5), crank pins (M1, M2, M3, M4) connected to said journals by arms (B11, B12, B22, B23, B33, B34, B44, B45), said arms having drillings (C2, C4) passing therethrough to permit lubricating oil to pass from the journals (T2, T4) to the crank pins (M1, M2, M3, M4), characterised in that said drillings (C2, C4) are sealed at their opening ends by rivets (6), each of said rivets (6) being formed by a metal sleeve (7) and a rod whose frustoconical end (8) is intended to be mounted by force in the interior of said sleeve (7), said frustoconical end (8) being positioned in the interior of said sleeve (7) in such a way that its larger diameter is directed towards the interior of the drilling (C4).

2. A crankshaft for a multi-cylinder internal combustion engine according to claim 1 characterised in that said frustoconical end (8) is positioned in the interior of said sleeve (7) in such a way that its larger diameter is in projecting relationship on the outside of said sleeve.

3. A crankshaft for a multi-cylinder internal combustion engine according to either one of claims 1 and 2 characterised in that said sleeve (7) has a peripheral groove (9).
